# EUROPÄISCHE PATENTANMELDUNG

(11) **EP 1 870 605 A1**
(43) Veröffentlichungstag der Anmeldung: **26.12.2007**
(21) Anmeldenummer: 06012600.0
(22) Anmeldetag: 20.06.2006
(51) Int. Cl.: F16C 3/08, B23P 9/02

(54) **Werkstück, insbesondere Kurbelwelle, mit erhöhter dynamischer Festigkeit**

(71) Anmelder: Georg Fischer Automotive AG, 8200 Schaffhausen (CH)
(72) Erfinder: Menk, Werner, 8200 Schaffhausen (CH); Rietzscher, Rolf, 40822 Mettmann (DE); Brauner, Roman, 9500 Wil (CH)
(74) Vertreter: Weiss, Wolfgang

(57) **Zusammenfassung**

Es wird ein Werkstück, insbesondere eine Kurbelwelle (1), mit erhöhter dynamischer Festigkeit vorgeschlagen, umfassend mindestens einen Wellenzapfen (2), mindestens eine im wesentlichen senkrecht dazu verlaufend ausgebildete Kurbelwange (3) und einen zwischen dem Wellenzapfen (2) und der Kurbelwange (3) ausgebildeten Übergangsbereich (4), wobei der Übergangsbereich (4) mindestens zwei unterschiedliche Krümmungen (R1, R2) aufweist.

## Beschreibung

Die Erfindung bezieht sich auf ein Werkstück, insbesondere eine Kurbelwelle, mit erhöhter dynamischer Festigkeit, umfassend mindestens einen Wellenzapfen, mindestens eine im wesentlichen senkrecht dazu verlaufend ausgebildete Kurbelwange und einen zwischen dem Wellenzapfen und der Kurbelwange ausgebildeten Übergangsbereich.

Im Kraftfahrzeugbau werden Kurbelwellen verwendet um die Hubbewegungen der Zylinderkolben in eine Drehbewegung umzuwandeln. Die Kurbelwelle weist hierzu sogenannte Hubzapfen oder Kurbelzapfen auf, die eine Kreisbewegung mit einem Radius um den Wellenzapfen beschreiben. Zwischen den Wellenzapfen und den Kurbelzapfen sind sogenannte Kurbelwangen ausgebildet. Der Kurbelzapfen ist mittels eines Übergangsbereiches mit der Kurbelwange verbunden. In diesem Übergangsbereich treten beim Betrieb der Kurbelwelle die höchsten Spannungsbelastungen auf. Zur Erhöhung der dynamischen Festigkeit der Kurbelwelle kann der Übergangsbereich durch Festwalzen, Rollieren, durch Nitrieren oder durch Laserhärtung gehärtet werden. Der Übergangsbereich zwischen Wellenzapfen und Kurbelwange wird mit einem Radius oder mit einem besonders dimensionierten Hinterstich oder Freistich ausgebildet.

Aus der DE 10235957 A1 ist eine gattungsgemässe Kurbelwelle bekannt. Die Kurbelwelle wird in dem Übergangsbereich zwischen der Kurbelwange und dem Wellenzapfen fest gewalzt. Nach dem Festwalzen, d.h. vor dem Schleifen, weist der Übergangsbereich Abrundungen auf, die mit sogenannten tangierenden Radien ausgebildet sind. Anschliessend wird der Wellenzapfen mit einer Schleifscheibe nachgearbeitet.

Ausgehend von diesem Stand der Technik ist es Aufgabe der Erfindung, ein Werkstück, insbesondere eine Kurbelwelle, anzugeben, die möglichst einfach herzustellen ist und die möglichst hohe Spannungsbelastungen ausgesetzt werden kann.

Diese Aufgabe wird gelöst durch ein Werkstück, insbesondere eine Kurbelwelle, mit erhöhter dynamischen Festigkeit, umfassend mindestens einen Wellenzapfen, mindestens eine im wesentlichen senkrecht dazu verlaufend ausgebildete Kurbelwange und einen zwischen dem Wellenzapfen und der Kurbelwange ausgebildeten Übergangsbereich, wobei der Übergangsbereich mindestens zwei unterschiedliche Krümmungen aufweist,

Bevorzugte Weiterbildungen der Erfindung ergeben sich aus den abhängigen Ansprüchen.

Es ist von Vorteil, dass die Kontur des Übergangsbereichs möglichst hohen Belastungen ausgesetzt werden kann. Dies wird dadurch erreicht, dass zumindest zwischen zwei der Krümmungen eine Übergangsgerade angeordnet ist. Dies wird auch dadurch erreicht, dass im Schnittpunkt der ersten Krümmung mit der Fläche der Kurbelwange die Tangente der ersten Krümmung mit der Fläche der Kurbelwange unter einem Winkel von 120° bis 150° angeordnet ist. Dies wird auch dadurch erreicht, dass im Schnittpunkt der zweiten Krümmung mit der Fläche des Wellenzapfens die Tangente der zweiten Krümmung mit der Fläche des Wellenzapfens unter einem Winkel von 135° bis 150° angeordnet ist. Dies wird weiter auch dadurch erreicht, dass die Übergangsgerade zur Ebene des Wellenzapfens unter einem Winkel von 30° bis 60° angeordnet ist.

An Stelle einer Übergangsgerade zwischen den unterschiedlichen Krümmungen können die Krümmungen auch in einem Übergangspunkt zusammen treffen. Die Krümmungen gehen dann mit einem relativ flachen Winkel ineinander über.

Ausführungsbeispiele der Erfindung werden anhand der Figuren beschrieben. Es zeigen:
Figur 1 einen Schnitt durch eine Kurbelwelle,
Figur 2 einen Schnitt durch eine weitere Kurbelwelle,
Figur 3 einen Schnitt durch eine weitere Kurbelwelle und
Figur 4 einen Schnitt durch eine weitere Kurbelwelle.

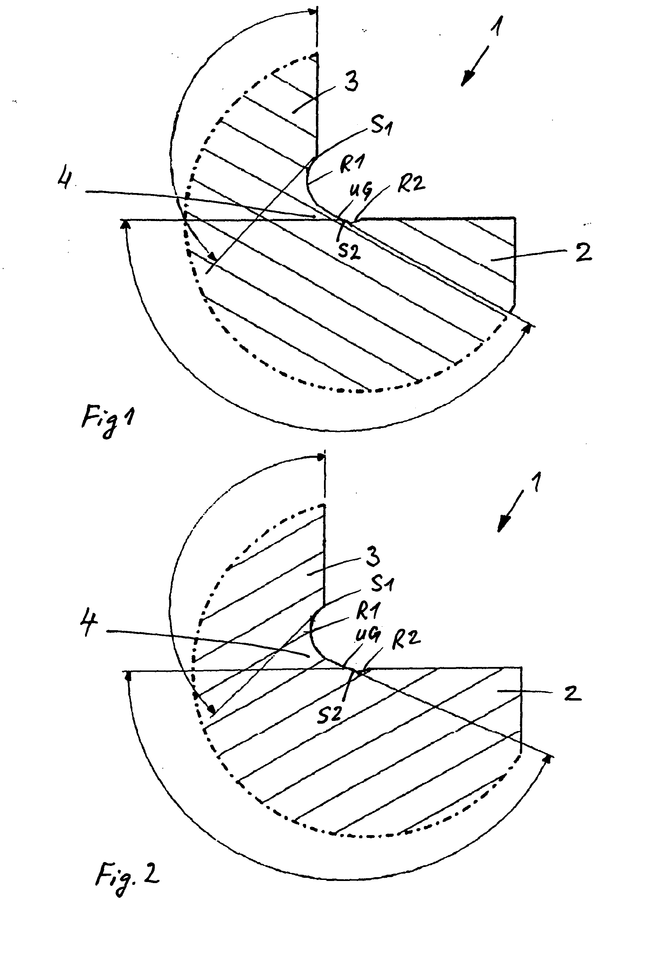

In den Figuren 1 bis 4 ist schematisch ein Ausschnitt aus einer Kurbelwelle 1 geschnitten dargestellt. Die Kurbelwelle 1 umfasst mehrere Wellenzapfen 2, die auf einer Kreisbahn konzentrisch um die Achse X der Kurbelwelle 1 eine Drehbewegung ausführen. An den jeweiligen Enden der Wellenzapfen 1 sind Kurbelwangen 3 ausgebildet. Die Hubbewegung des Zylinderkolbens und der Kolbenstange wird mittels der Kurbelwelle 1 in eine Drehbewegung umgewandelt. Jede Kolbenstange ist hierzu mit einem Wellenzapfen 2 lagernd verbunden. Auf den Wellenzapfen 2 wirken grosse Druck- und Zugkräfte. Die Kurbelwangen 3 dienen als Anschlag in axialer Richtung der Kurbelwelle 1 und sind ebenfalls hohen Belastungen ausgesetzt.

Die Kurbelwangen 3 sind unter einem rechten Winkel zu den Wellenzapfen 2 angeordnet. Zwischen der Kurbelwange 3 und dem Wellenzapfen 2 ist jeweils einen Übergangsbereich 4 ausgebildet. Der Übergangsbereich 4 wird grob im Gussformteil der Kurbelwelle 1 ausgebildet und nach dem Giessen durch eine spanabhebende Bearbeitung genauer ausgebildet. Im Übergangsbereich 4 treten im Betriebszustand der Kurbelwelle 1 die höchsten Belastungen auf.

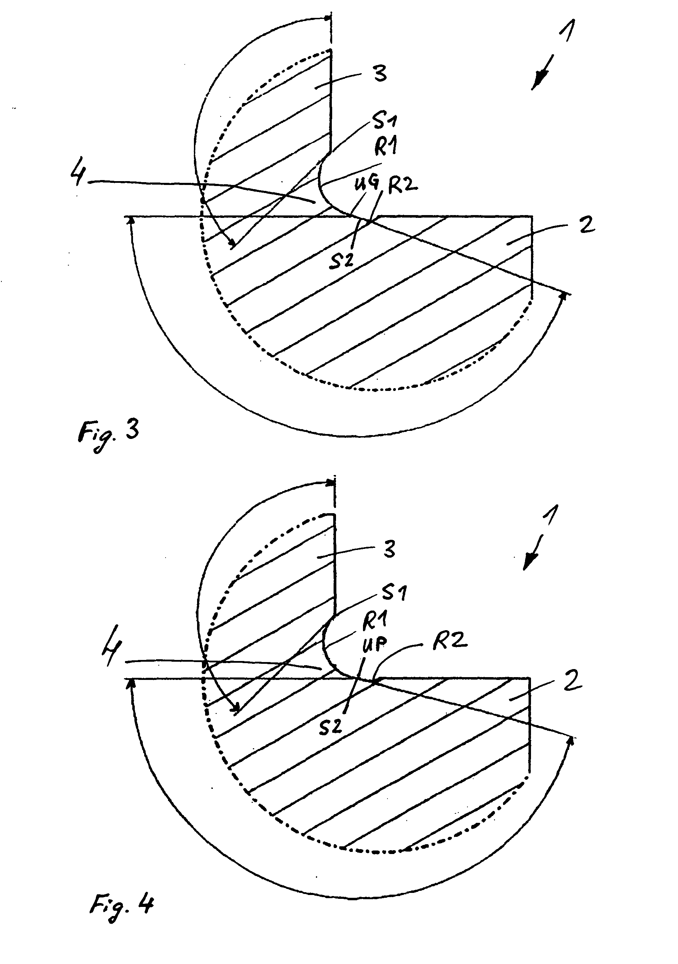

In den Figuren 1 bis 4 ist der Übergangsbereich 4 mit zwei unterschiedlichen Krümmungen R1, R2 ausgebildet. Die erste Krümmung R1 im Bereich der Kurbelwange 3 weist einen 2- bis 2,5-mal so grossen Radius auf als die zweite Krümmung R2 im Bereich des Wellenzapfens 2. Die erste Krümmung R1 und die zweite Krümmung R2 sind derart ausgebildet, dass zwischen den zwei Krümmungen R1, R2 ein Übergangspunkt UP, wie beispielsweise in Figur 4, oder eine Übergangsgerade UG, wie beispielsweise in den Figuren 1 bis 3, definiert werden kann.

Die erste Krümmung R1 bildet mit der Fläche der Kurbelwange 3 einen ersten Schnittpunkt S1. Im Schnittpunkt S1 bildet die Tangente der ersten Krümmung R1 mit der Fläche der Kurbelwange 3 einen Winkel von etwa 120° bis 150°. Die zweite Krümmung R2 bildet mit der Fläche des Wellenzapfens 2 einen zweiten Schnittpunkt S2. Im Schnittpunkt S2 bildet die Tangente der zweiten Krümmung R2 mit der Fläche des Wellenzapfens 2 einen Winkel von etwa 135° bis 170°.

In den Figuren 1 bis 3 ist zwischen den zwei Krümmungen R1, R2 eine Übergangsgerade UG ausgebildet. Die Übergangsgerade UG ist zur Ebene des Wellenzapfens 2 unter einem Winkel von 30° bis 60° verlaufend angeordnet.

In Figur 4 ist zwischen den zwei Krümmungen R1, R2 keine Übergangsgerade UG, sondern lediglich ein Übergangspunkt UP ersichtlich. In diesem Übergangspunkt UP gehen die zwei Krümmungen R1 ,R2 unter einem relativ flachen Winkel von 150° bis 180° in einander über, das heisst, die Tangenten der ersten und der zweiten Krümmung bilden im Übergangspunkt UP einen relativ flachen Winkel von 150° bis 180°. Der Übergangspunkt UP kann unter der Ebene der Kurbelwange 3 und/oder unter der Ebene des Wellenzapfens 2 liegen.

Mit der hier beschriebenen Ausbildung des Übergangsbereiches 4 zwischen der Kurbelwange 3 und dem Wellenzapfen 2 werden die im Betrieb örtlich auftretenden Spannungsspitzen im Vergleich zu den bekannten Kurbelwellen mit einer einfachen Kerbe um 15 bis 25% reduziert. Die Dauerfestigkeit der Kurbelwelle 1 wird höher und die Lebensdauer kann wesentlich länger garantiert werden, oder die Kurbelwelle 1 kann bei gleich bleibender Belastung wesentlich leichter ausgeführt werden. Dasselbe Konstruktionsprinzip kann auf andere geeignete Bauteile mit ähnlicher dynamischer Belastung, wie beispielsweise Radträger oder Achsschenkel, die jeweils einen Wellenzapfen 2 aufweisen, angewendet werden.

## Patentansprüche

1. Werkstück, insbesondere Kurbelwelle (1), mit erhöhter dynamischer Festigkeit, umfassend mindestens einen Wellenzapfen (2), mindestens eine im wesentlichen senkrecht dazu verlaufend ausgebildete Kurbelwange (3) und einen zwischen dem Wellenzapfen (2) und der Kurbelwange (3) ausgebildeten Übergangsbereich (4), **dadurch gekennzeichnet, dass** der Übergangsbereich (4) mindestens zwei unterschiedliche Krümmungen (R1, R2) aufweist.

2. Werkstück, insbesondere Kurbelwelle (1) nach Anspruch 1, **dadurch gekennzeichnet, dass** zumindest zwischen zwei der Krümmungen (R1, R2) eine Übergangsgerade (UG) angeordnet ist.

3. Werkstück, insbesondere Kurbelwelle (1) nach mindestens einem der Ansprüche 1 oder 2, **dadurch gekennzeichnet, dass** im Schnittpunkt (S1) der ersten Krümmung (R1) mit der Fläche der Kurbelwange (3) die Tangente der ersten Krümmung (R1) mit der Fläche der Kurbelwange (3) unter einem Winkel von 120° bis 150° angeordnet ist.

4. Werkstück, insbesondere Kurbelwelle (1) nach mindestens einem der Ansprüche 1 bis 3, **dadurch gekennzeichnet, dass** im Schnittpunkt (S2) der zweiten Krümmung (R2) mit der Fläche des Wellenzapfens (2) die Tangente der zweiten Krümmung (R2) mit der Fläche des Wellenzapfens (2) unter einem Winkel von 135° bis 170° angeordnet ist.

5. Werkstück, insbesondere Kurbelwelle (1) nach mindestens einem der Ansprüche 1 bis 4, **dadurch gekennzeichnet, dass** die Übergangsgerade (UG) zur Ebene des Wellenzapfens (2) unter einem Winkel von 30° bis 60° angeordnet ist.

6. Werkstück, insbesondere Kurbelwelle (1) nach dem Anspruch 1, **dadurch gekennzeichnet, dass** die zwei Krümmungen (R1, R2) in einem Übergangspunkt (UP) in einander übergehend angeordnet sind.

7. Werkstück, insbesondere Kurbelwelle (1) nach mindestens einem der Ansprüche 1 bis 6, **dadurch gekennzeichnet, dass** im Übergangspunkt (UP) der ersten Krümmung (R1) mit der zweiten Krümmung (R2) die Tangente der ersten Krümmung (R1) mit der Tangente der zweiten Krümmung (R2) unter einem Winkel von 150° bis 180° angeordnet ist.

8. Werkstück, insbesondere Kurbelwelle (1) nach mindestens einem der Ansprüche 1 bis 7, **dadurch gekennzeichnet, dass** der Übergangspunkt (UP) unter der Ebene der Fläche des Wellenzapfens (2) angeordnet ist.

9. Werkstück, insbesondere Kurbelwelle (1) nach mindestens einem der Ansprüche 1 bis 7, **dadurch gekennzeichnet, dass** der Übergangspunkt (UP) unter der Ebene der Fläche der Kurbelwange (3) angeordnet ist.

10. Werkstück, insbesondere Kurbelwelle (1) nach mindestens einem der Ansprüche 1 bis 9, **dadurch gekennzeichnet, dass** der Übergangspunkt (U) unter der Ebene der Fläche des Wellenzapfens (2) und unter der Ebene der Fläche der Kurbelwange (3) angeordnet ist.
